# EUROPÄISCHE PATENTSCHRIFT

(11) **EP 1 187 979 B1**
(45) Veröffentlichungstag und Bekanntmachung des Hinweises auf die Patenterteilung: **22.12.2004**
(21) Anmeldenummer: 00947783.7
(22) Anmeldetag: 06.06.2000
(51) Int. Cl.: F02K 9/62

(54) **RAKETENSCHUBKAMMER**
ROCKET THRUST CHAMBER
CHAMBRE DE POUSSEE POUR FUSEE

(30) Priorität: 17.06.1999 DE 19927734
(43) Veröffentlichungstag der Anmeldung: 20.03.2002
(73) Patentinhaber: EADS SPACE Transportation GmbH, 28199 Bremen (DE)
(72) Erfinder: SOWA, Armin, D-85521 Ottobrunn (DE)
(74) Vertreter: Ulrich, Thomas
(86) Internationale Anmeldenummer: PCT/DE2000/001826
(87) Internationale Veröffentlichungsnummer: WO 2000/079116

(56) Entgegenhaltungen:
- EP-A- 0 899 448
- EP-A- 0 899 449
- DE-A- 2 166 904
- US-A- 2 405 465

## Beschreibung

Die Erfindung betrifft eine Schubkammer eines Antriebstriebwerks für Satelliten und Transportgeräte für Raumfahrtanwendungen sowie deren Lageregelungs-Antriebssystem, und insbesondere für Transportgeräte, die Satelliten von der Flugbahn der Trägerrakete in die Satelliten-Nutzungsbahn bringen.

Derartige Antriebstriebwerke weisen einen Einspritzkopf auf, durch den die Treibstoffe, die beispielsweise dem Brennstoff MMH (Hydrazin-Verbindung) und einen Oxydator N₂O₄ (Stickstofftetrooxyd) in die an dem Einspritzkopf angebrachte Schubkammer mit einer Brennkammer, einen Düsenteil und eine Expansionsdüse eingespritzt werden. Bei der Verbrennung der Treibstoffe treten sehr hohe Temperaturen auf, die im Kern der Schubkammer, d.h. in den Verbrennungsgasen, im Bereich bis zu 2600° C haben. Dabei wird die Wand des Düsenteils auf eine Temperatur von ca. 1600° C erwärmt. Aus diesem Grund wurden bislang weitgehend Düsenteile verwendet, in deren Wandung Kühlkanäle vorgesehen sind, die mit Treibstoff gekühlt werden, der nachfolgend der Verbrennung zugeführt wird. Derartige regenerativ gekühlte Düsenteile sind jedoch aufwendig in der Herstellung und haben Nachteile im Betriebsverhalten beim Zünden und Abschalten der Triebwerke.

Durch Verwendung von Hochtemperatur-Werkstoffen wie Platin-Iridium- (Pt-Ir-) Legierungen kann auf derartige regenerative Kühlbauweisen verzichtet werden. Eine aus Iridium beschichtetem Rhenium bestehende Brennkammenwand eines Antriebwerks ist aus EP-A-0 899 449 bekannt. Ein Nachteil bei der Verwendung solcher Hochtemperatur-Werkstoffe ist, daß diese mit den Materialien, die für die an deren Düsenteil anschließende Brennkammer sowie die Expansionsdüse verwendet werden, z.B. mit Chrom-Nickel-Molybdän-Legierungen, Werkstoffe schweißtechnisch nicht ausreichend verbunden werden können. Durch die Unterschiede in den physikalischen Eigenschaften, wie Schmelzpunkt, Wärmeausdehnung, spezifisches Gewicht, und in den kristallinen Gefügestrukturen von Pt-Ir- und Chrom-Nickel-Molybdän-Legierungen findet beim Verschweißen dieser beiden metallischen Legierungen keine ausreichende kristalline Verbindung statt. Raster-Elektronenmikroskop (REM)-Betrachtungen zeigen in der Schmelzzone eine ausgeprägte kristalline Grenzschicht von wenigen tausendstel Millimetern Dicke (µ-Bereich) bei der Platin-Iridium-Legierung auf. Es kann deshalb von einer klassischen Verschmelzung nicht gesprochen werden. Die dabei erzielten Schweißverbindungen weisen deshalb nicht die erforderliche dynamische Festigkeit auf und führen bei Vibrationsbelastungen zum Bruch.

Es ist daher eine Aufgabe der Erfindung, eine Schubkammer für Satelliten und Raumfahrt-Transportgeräte zu schaffen, bei der die Verwendung von regenerativen Düsenteilen nicht erforderlich ist und bei deren Wandungen eine ausreichende Festigkeit bei Temperaturen bis 1600° C aufweisen.

Diese Aufgabe wird bei einem Gegenstand nach dem Oberbegriff der Erfindung mit dem kennzeichnenden Teil des Anspruchs 1 gelöst. Weitere Ausführungsformen sind in den Unteransprüchen angegeben.

Die erfindungsgemäße Schubkammer hat den Vorteil, daß diese verhältnismäßig einfach und mit geringen Kosten hergestellt werden kann. Ein weiterer Vorteil ist, daß sie die Anforderung bezüglich Festigkeit bei sehr hohen Temperaturen erfüllt. Ein weiterer Vorteil ist, daß bereits vorhandene Triebwerkskonstruktionen im wesentlichen bestehen bleiben können und mit einfachen Modifikationen die geforderte Betriebsfestigkeit erreicht werden kann.

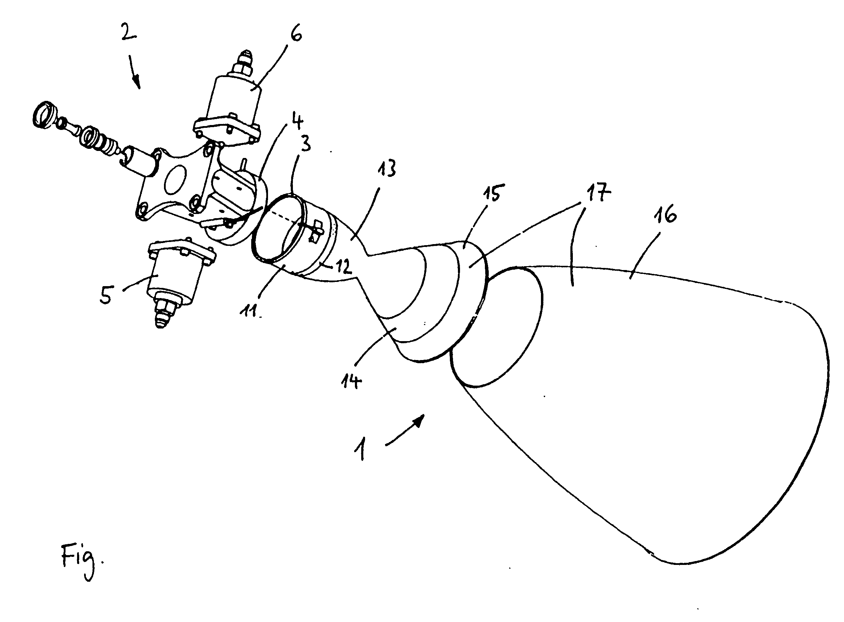

Im folgenden wird die Erfindung anhand der beigefügten Figur beschrieben, die eine erfindungsgemäße Schubkammer zusammen mit einem Einspritzkopf in einer perspektivischen Explosionsdarstellung zeigt.

Die Figur zeigt eine Schubkammer 1 und einen Einspritzkopf 2. Die Schubkammer 1 ist rotationssymmetrisch gebildet und ist mit ihrem dem Einspritzkopf 2 zugewandten Ende 3 an einem Flansch 4 des Einspritzkopfs 2 vorzugsweise mittels einer Schweißverbindung verbunden. Am Einspritzkopf 2 sind Treibstoff-Absperrventile 5, 6 jeweils für den Brennstoff und den Oxidator angebracht. Über diese Treibstoff-Absperrventile 5, 6 werden die Treibstoffe, d.h. der Brennstoff und der Oxidator dem Einspritzkopf zugeführt, von wo diese drallartig der Schubkammer 1 zugeführt werden.

Von dem Einspritzkopf 2 aus gesehen ist die Schubkammer 1 aus einem Brennkammergehäuse 11, einem ersten Zwischenring 12, einem Düsenteil 13, einem zweiten Zwischenring 14, einem Adapterring 15 und einem Expansionsdüsenteil 16 gebildet. Der Adapterring 15 und Expansionsdüsenteil 16 bilden zusammen eine Expansionsdüse 17.

Die Treibstoffe werden drallartig an die Innenwand des Brennkammergehäuses 11 eingespritzt und bilden dort einen Kühlfilm aus, der eine Richtungskomponente in axialer und Umfangsrichtung des Brennkammergehäuses 11 aufweist. Im Innern der Brennkammer findet die Verbrennung der Treibstoffe statt, die von dem Kühlfilm in das Innere der Brennkammer gelangt sind. Auf diese Weise baut sich der Kühlfilm in axialer Richtung vom Einspritzkopf 2 aus gesehen ab. Dieser Kühlfilm ist im Bereich des Düsenteils 13 nicht mehr vorhanden. Hinzukommt, daß durch die Verjüngung des Querschnitts im Düsenteil 13 eine Temperaturerhöhung der Verbrennungsgase erfolgt. Aus diesem Grund ist die Wärmebelastung des Düsenteils 13 deutlich höher als die des Brennkammergehäuses 11. Um eine kostengünstige Herstellung der Schubkammer 1 zu ermöglichen, sind daher unterschiedliche Werkstoffe zur Bildung des Brennkammergehäuses 11 und des Düsenteils 13 vorgesehen. Hinzukommt, daß die Materialien, die für die hohen Temperaturen im Düsenteil 13 geeignet sind, ein um ein 2½-faches höheres spezifisches Gewicht als die für das Brennkammergehäuse 11 vorgesehenen Werkstoffe haben. Da im Expansionsdüsengehäuse 17 ähnliche Temperaturen und Belastungen herrrschen als im Brennkammergehäuse 11, sind für das Expansionsdüsengehäuse 17 üblicherweise diesselben Werkstoffe vorgesehen als für das Brennkammergehäuse 11.

Erfindungsgemäß ist das Brennkammergehäuse 11 aus einem hochwarmfesten Stahl, vorzugsweise aus einer Chrom-Nickel-Molybdän-Legierung gebildet. Ebenso sind erfindungsgemäß der Adapterring 15 und der Expansionsdüsenteil 16 aus einem hochwarmfesten Stahl, insbesondere aus einer Chrom- Nickel-Molybdän-Legierung gebildet.

Der Düsenteil 13 ist aus einer Platin-Iridium-Legierung gebildet. Der zwischen dem Düsenteil 13 und dem Brennkammergehäuse 11 angeordnete erste Zwischenring 12, ist aus einer Platin-Rhodium-Legierung gebildet. Ebenso ist der zweite Zwischenring 14 aus einer Platin-Rhodium-Legierung gebildet.

Die Bestandteile des Schubkammergehäuses 1 sind miteinander verschweißt. Dadurch ist eine stoßfreie Zusammensetzung des Schubkammergehäuses 1 aus dem Brennkammergehäuse 11, dem ersten Zwischenring 12, dem Düsenteil 13, dem zweiten Zwischenring 14, dem Adapterring 15 und dem Expansionsdüsenteil 16 möglich, so daß an der Innenseite des Schubkammergehäuses 1 keine Unebenheiten auftreten.

Das direkte Verscheißen des Düsenteils 13 aus der Platin-Iridium-Legierung mit dem Brennkammergehäuse 11 aus hochwarmfestem Stahl, sowie mit dem Adapterring 15 aus einem hochwarmfesten Stahl ist aufgrund der unterschiedlichen physikalischen Eigenschaften dieser Legierungen schweißtechnisch nicht machbar. Jedoch durch das Zwischenlagern des ersten Zwischenrings 12 zwischen dem Brennkammergehäuse 11 und dem Düsenteil 13 sowie durch Zwischenlagern des zweiten Zwischenrings 14 zwischen dem Düsenteil 13 und dem Adapterring 15 kann das Schubkammergehäuse 1 aus dem Brennkammergehäuse 11, den Expansionsdüsengehäuse 17, und dem Düsenteil 13 mittels den ersten 12 und dem zweiten 14 Zwischenring schweißtechnisch zusammengefügt werden, so daß eine einfache Herstellung des Schubkammergehäuses 1 möglich ist. Außerdem weist das erfindungsgemäße Schubkammergehäuse 1 mit dem ersten Zwischenring 12 und mit den zweiten Zwischenring 14 eine ausreichende Festigkeit bei den üblicherweise im Schubkammergehäuse 1 auftretenden Temperaturen auf. Wesentliche physikalische Eigenschaften, insbesondere die Wärmeausdehnungs-Eigenschaft und, die Elastizität unter mechanischer Belastung sind bei der Platin-Rhodium-Legierung, wie sie für den ersten 12 und den zweiten 14 Zwischenring verwendet werden, zwischen den Werteh der Legierungen gelegen, die für das Brennkammergehäuse 11 bzw. des Expansionsdüsengehäuse 17 und den Düsenteil 13 vorgesehen sind. Dadurch ergibt sich ein verbessertes Dehnverhalten der Bereiche, die im Schweißnahtbereich gelegen sind sowie ein Abbau der Streßbelastung bei Vibration.

Die Verschweißung der Teile des Schubkammergehäuses 1 erfolgt vorzugsweise mittels Elektronenstrahl-Schweißung, da dadurch ein geringer Wärmeeintrag in das Schubkammergehäuse 1 während der Herstellung desselben erreicht wird.

Das Expansionsdüsenteil 16 ist vorzugsweise aus einem Blech mittels Druckwalzen geformt.

Die Schweißverbindungen zwischen den Teilen des Schubkammergehäuses 1 werden vorzugsweise mittels eines dreidimensionalen Ultraschall-Prüfverfah-rens an mehreren Stellen geprüft.

## Patentansprüche

1. Schubkammergehäuse (1) für ein Antriebstriebwerk für Raumfahrt-Anwendungen, das mit einem Ende (3) an einem Einspritzkopf (2) befestigt ist und ein Brennkammergehäuse (11) aus einem hochwarmfesten Stahl und ein Expansionsdüsengehäuse (17) aus einem hochwarmfesten Stahl aufweist, **dadurch gekennzeichnet, dass** zwischen dem Brennkammergehäuse (11) und dem Expansionsdüsengehäuse (17) ein Düsenteil (13) aus einer Platin-Iridium-Legierung angeordnet ist.

2. Schubkammergehäuse nach Anspruch 1, **dadurch gekennzeichnet, daß** das Brennkammergehäuse (11) über einen ersten Zwischenring (12) mit dem Düsenteil (13) und der Düsenteil (13) über einen zweiten Zwischenring (14) mit dem Expansionsdüsengehäuse (17) mittels Schweißverbindungen verschweißt sind, wobei der erste (12) und der zweite (14) Zwischenring aus einer Platin-Rhodium-Legierung gebildet sind.

3. Schubkammergehäuse nach Anspruch 2, **dadurch gekennzeichnet, daß** die Schweißverbindungen mittels eines Elektronenstrahl-Verfahrens hergestellt sind.

4. Schubkammergehäuse nach Anspruch 2 oder 3, **dadurch gekennzeichnet, daß** das Expansionsdüsengehäuse (17) einen Expansionsdüsenteil (16) und einen mit dem zweiten Zwischenring (14) schweißtechnisch verbundenen Adapterring (15) umfaßt, wobei der Adapterring (15) mit dem Expansionsdüsenteil (16) verschweißt ist.

## Claims

1. Thrust chamber housing (1) for a drive mechanism for space travel applications, which housing is secured at one end (3) to an injection head (2) and comprises a combustion chamber housing (11) of a high-temperature-resistant steel and an expansion nozzle housing (17) of a high-temperature-resistant steel, **characterised in that** a nozzle part (13) of a platinum-iridium alloy is arranged between the combustion chamber housing (11) and the expansion nozzle housing (17).

2. Thrust chamber housing according to claim 1, **characterised in that** the combustion chamber housing (11) is welded by means of weld joints via a first intermediate ring (12) to the nozzle part (13) and the nozzle part (13) is welded by means of weld joints via a second intermediate ring (14) to the expansion nozzle housing (17), the first intermediate ring (12) and the second intermediate ring (14) being formed of a platinum-rhodium alloy.

3. Thrust chamber housing according to claim 2, **characterised in that** the weld joints are produced by means of an electron beam method.

4. Thrust chamber housing according to claim 2 or 3, **characterised in that** the expansion nozzle housing (17) comprises an expansion nozzle part (16) and an adapter ring (15) joined by means of welding to the second intermediate ring (14), the adapter ring (15) being welded to the expansion nozzle part (16).

## Revendications

1. Carter de chambre de poussée (1) pour un propulseur pour applications spatiales, qui est fixé par une extrémité (3) sur un injecteur (2) et présente un carter de chambre de combustion (11) en acier à haute résistance à chaud et un carter de divergent (17) en acier à haute résistance à chaud, **caractérisé en ce qu'**une partie tuyère (13) en un alliage platine-iridium est disposée entre le carter de chambre de combustion (11) et le carter de divergent (17).

2. Carter de chambre de poussée suivant la revendication 1, **caractérisé en ce que** le carter de chambre de combustion (11) est soudé par l'intermédiaire d'un premier anneau intercalaire (12) à la partie tuyère (13) et que la partie tuyère (13) est soudée par l'intermédiaire d'un second anneau intercalaire (14) au carter de divergent (17) au moyen de liaisons soudées, les premier (12) et second (14) anneaux intercalaires étant formés d'un alliage platine-rhodium.

3. Carter de chambre de poussée suivant la revendication 2, **caractérisé en ce que** les liaisons soudées sont réalisées au moyen d'un procédé par faisceau d'électrons.

4. Carter de chambre de poussée suivant l'une des revendications 2 et 3, **caractérisé en ce que** le carter de divergent (17) comprend une partie divergent (16) et un anneau adaptateur (15) relié par soudage au second anneau intercalaire (14), l'anneau adaptateur (15) étant soudé à la partie divergent (16).
